# EUROPÄISCHE PATENTSCHRIFT

(11) **EP 0 371 226 B1**
(45) Veröffentlichungstag und Bekanntmachung des Hinweises auf die Patenterteilung: **02.03.1994**
(21) Anmeldenummer: 89117558.0
(22) Anmeldetag: 22.09.1989
(51) Int. Cl.: B62D 51/00

(54) **Flurförderfahrzeug**
Floor conveyer
Véhicule chargeur-élévateur

(30) Priorität: 01.12.1988 DE 3840800
(43) Veröffentlichungstag der Anmeldung: 06.06.1990
(73) Patentinhaber: Dr.Ing.h.c. F. Porsche Aktiengesellschaft, 70435 Stuttgart (DE)
(72) Erfinder: Powell, Robert, D-7530 Pforzheim (DE)

(56) Entgegenhaltungen:
- DE-A- 1 455 572
- GB-A- 2 009 066

## Beschreibung

Die Erfindung betrifft ein Flurförderfahrzeug nach dem Oberbegriff des Anspruchs 1.

Es ist aus der DE-C- 23 19 618 ein Flurförderfahrzeug mit einem Fahrantrieb bekannt, das über eine Deichsel von Hand geführt wird, die endseitig einen Lenkkopf mit Handgriffen umfaßt und neben diesen angeordnete Bedienungselement, wie Fahrregler, besitzt. Die Fahrregler weisen radial - in bezug auf die Handgriffe - abstehende Flügel auf, die vom Bedienenden hintergriffen werden. Im Horn des Lenkkopfes sind weitere Schalter, insbesondere zum Heben und Senken einer Lastgabel angeordnet. Bei diesem bekannten Fahrzeug sind die Bedienungselelmente in der Weise vorgesehen, daß z.B. eine mit dem Fahrbetrieb zusammenfallende Bewegung der Lastgabel wahrend des Arbeitsbetriebs nicht in einfacher Weise durchführbar ist.

Aufgabe der Erfindung ist es, eine ergonomische Bedienung der Fahrregler sowie der weiteren Schalter für ein Flurförderfahrzeug zu schaffen, durch die kombinierte Bedienungsmöglichtkeiten gewährleistet sind.

Diese Aufgabe wird erfindungsgemäß durch die kennzeichnenden Merkmale des Anspruchs 1 gelöst.

Der mit der Erfindung hauptsächlich erzielte Vorteil besteht darin, daß durch den vom Daumen und Zeigefinger einer Bedienperson umgreifbaren und zu verstellenden Fahrregler die Möglichkeit besteht, mittels einer kleinen Verlagerung des Daumens vom Fahrregler zum Hebe- und Senkschalter das Fahrzeug in einen Fahrbetrieb zu schalten, aber gleichzeitig auch die Lastgabel über den Schalter anzuheben bzw. abzusenken.

Hierzu weist der Fahrregler eine spezielle Ausgestaltung mit zwei angeformten Betätigungsflächen für eine Hand der Bedienperson auf, die sich derart gegenüberliegen, daß die Hand des Benutzers ermüdungsfrei beim Umfassen des Griffes gleichzeitig den Fahrregler über diese beiden Betätigungsflächen oder wenigstens über eine der Betätigungsflächen bedienen kann. Durch den unmittelbar im Griffbereich des Daumens der Bedienungshand liegenden Hebe- und Senkschalter kann dieser ohne eine wesentliche Veränderung der Lage der Hand auf demGriff gleichzeitig betätigt werden, wodurch eine ergonomische Bedienung gewährleistet ist.

Ein Ausführungsbeispiel der Erfindung ist in der Zeichnung dargestellt und wird im folgenden näher beschrieben.

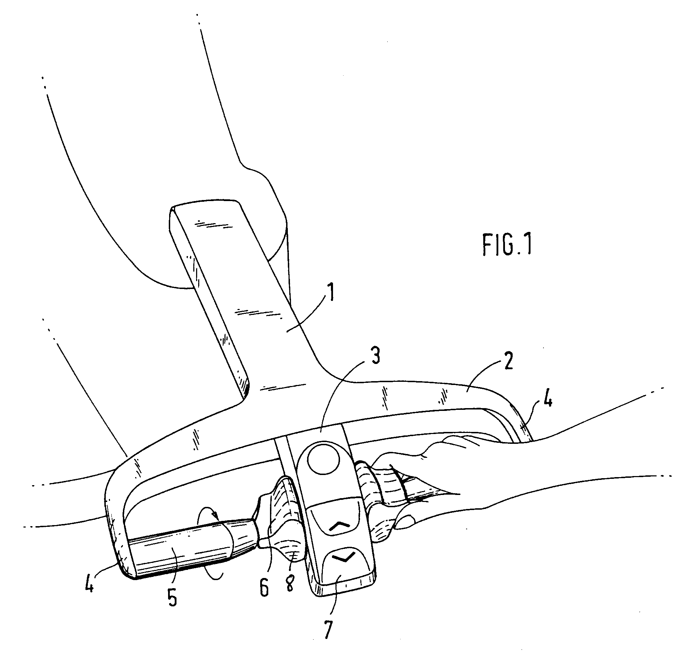

Es zeigen
- Fig. 1: eine schaubildliche Ansicht auf den Lenkkopf eines Flurförderfahrzeugs mit Bedienungselementen, wie Fahrregler und Hebe- und Senkschalter,

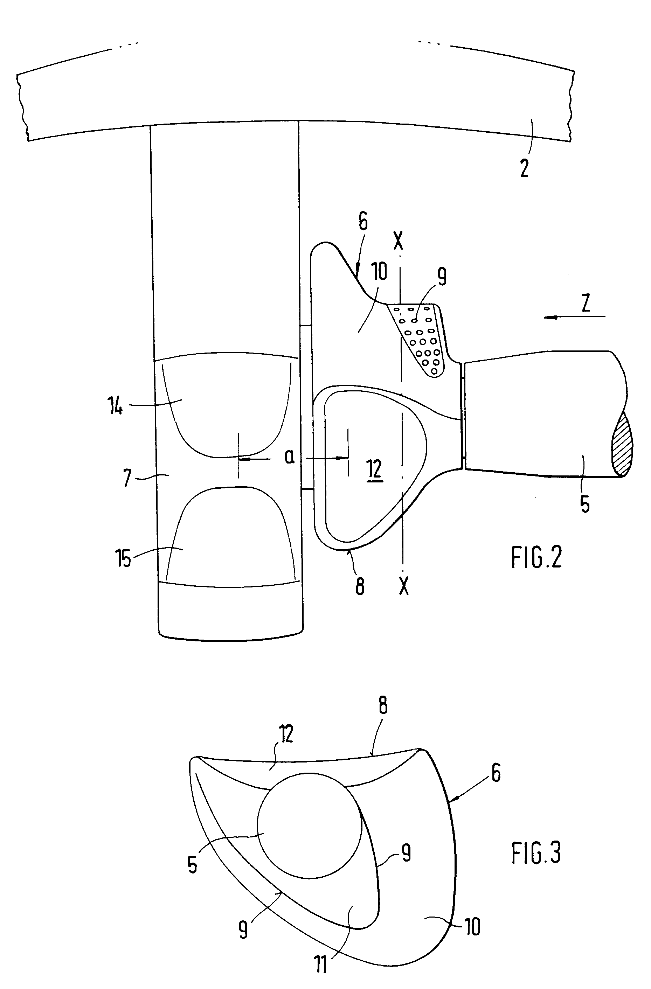

- Fig. 2: eine Draufsicht auf einen Teil des Lenkkopfes mit einem Handgriff und den Bedienungselementen und
- Fig. 3: eine Ansicht in Pfeilrichtung Z der Fig. 2 auf den Fahrregler mit seinen beiden Betätigungsflächen gesehen.

Ein Flurförderfahrzeug umfaßt zum Führen und Bedienen eine schwenkbar angelenkte Deichsel 1 mit einem Lenkkopf 2, an dem zwischen einem deichselseitigen Horn 3 und Schenkeln 4 des Lenkkopfes 2 Handgriffe 5 gehalten sind. Zu beiden Seiten des Horns 3 sind achsgleich mit den Handgriffen 5 Fahrregler 6 vorgesehen, wobei im Horn 3 ein Hebe- und Senkschalter 7 mit Bedienungsflächen 14, 15 für die Lastgabeln des Fahrzeugs sowie ein Notschalter angeordnet sind.

Der Fahrregler 6 ist gegenüber den Handgriffen 5 relativ verdrehbar gelagert und besteht aus einem annähernd scheibenförmigen Segment 10 mit zwei umfangsseitig angeformten Betätigungsflächen 8 und 9. Die erste Betätigungsfläche 8 erstreckt sich etwa quer zum Handgriff 5, ist muldenförmig ausgebildet und liegt in Ruhestellung in einer parallelen Ebene zu den Bedienungsflchen 14, 15 des chalters 7.

Die zweite Betätigungsfläche 9 des Fahrreglers 7 ist nahezu gegenüberliegend der ersten Betätigungsfläche 8 angeordnet und wird am Nocken 11 gebildet. Dieser erstreckt sich axial von der Ebene X-X des scheibenförmigen Segments 10 zum Handgriff 5 und schließt an diesen an.

Die Betätigungsflächen 8 und 9 sind in der Weise angeordnet und ausgeführt, daß bei einem Umfassen des Handgriffs 5 von einer Hand der Bedienperson jeweils der Daumen auf der ersten Betätigungsfläche 8 liegt und der Zeigefinger die Betätigungsfläche 9 am Nocken 11 umgreift.

Die erste Betätigungsfläche 8 des Fahrreglers 6 ist unmittelbar benachbart des schalters 7 bzw. der Bedienungsflächen 14, 15 mit einem kleinen überbrückbaren Greifabstand a angeordnet. Hierdurch ist es in einfacher Weise möglich, ohne die sichere Umfassung des Griffes 5 zu verlassen, den Daumen der Bedienungshand von der Mulde 121 des Fahrreglers 6 zu den Bedienungsflächen 14, 15 des Schalters 7 zu verändern um die Lastgabel zu steuern. Gleichzeitig kann aber auch durch die Umfassung des Nockens 11 der Fahrregler 6 mit dem Zeigefinger verdreht werden, so daß eine kombinierte Fahr- und Hubbewegung möglich wird.

## Patentansprüche

1. Flurförderfahrzeug mit einem Fahrantrieb, das über eine Deichsel (1) von Hand geführt wird, die einen Lenkkopf (2) mit Handgriff umfaßt, welche zu beiden Seiten eines Deichselhorns (3) angeordnet und achsgleich mit neben dem Horn (3) gelagerten, verdrehbaren Fahrreglern (6) gehalten sind, und benachbart im Deichselhorn (3) einen Hebe- und Senkschalter (7) für eine Lastgabel aufweist, wobei der Fahrregler (6) eine scheibenförmiges Segment mit zwei umfangsseitig angeformten Betätigungsflächen (8, 9) umfaßt, **gekennzeichnet durch** die Kombination folgender Merkmale:
a) Die Betätigungsfläche (8) erstreckt sich parallel zur Achse des Handgriffs (5) und ist als Mulde (12) für einen Daumen einer Bedienperson ausgebildet.
b) Die weitere Betätigungsfläche (9) ist an einem aus dem Segment (10) vorragenden und von einem Zeigefinger der Bedienperson umgreifbaren, gewölbte Flächten aufweisenden Nocken (11) gebildet.
c) Der Nocken (11) ist gegenüberliegend der Mulde (12) angeordnet und weist im Bereich seiner Erhebung die Betätigungsfläche (9) auf.
d) Bedienungsflächen (14 und 15) des Hebe- und Senkschalters (7) sind im Griffbereich eines Daumens der Bedienperson zur Ermöglichung der gleichzeitigen Betätigung des benachbarten Nockens (11) des Fahrreglers (6) durch den Zeigefinger der Bedienperson angeordnet.

## Claims

1. A trolley with a travelling mechanism, guided manually by way of a steering shaft (1) comprising a steering head (2) with a handle arranged on both sides of a steering-shaft web (3) and held coaxially with rotatable travel controls (6) mounted adjacent to the web (3), and comprising an adjacent lifting and lowering switch (7) in the steering-shaft web (3) for a loading fork, wherein the travel control (6) comprises a disc-shaped segment with two actuating faces (8, 9) formed integrally on the periphery, **characterized by** the combination of the following features:
a) the actuating face (8) extends parallel to the axis of the handle (5) and is constructed as a hollow (12) for an operator's thumb;
b) the farther actuating face (9) is formed on a cam (11) which projects from the segment (10) and around which the operator's index finger can engage and which has convex faces;
c) the cam (11) is arranged opposite the hollow (12) and is provided with the actuating face (9) in the region of its raised portion, and
d) operating faces (14 and 15) of the lifting and lowering switch (7) are arranged in the gripping area of the operator's thumb in order to allow the adjacent cam (11) of the travel control (6) to be actuated at the same time by the operator's index finger.

## Revendications

1. Véhicule chargeur-élévateur comportant un mécanisme de roulement qui est guidé à la main, par l'intermédiaire d'un timon (1) lequel comprend un tête de direction (2) avec poignées qui sont situées des deux côté d'une corne (3) du timon et maintenues sur le même axe avec des régulateurs de marche (6) tournants, montés à côté de la corne (3), et qui comporte, à proximité de la corne (3) du timon, un interrupteur de levage et d'abaissement (7) pour une fourche de charge, le régulateur de marche (6) comportant un segment en forme de disque avec deux surfaces d'actionnement (8, 9) formées sur la périphérie, caractérisé par la combinaison des caractéristiques suivantes :
a) La surface d'actionnement (8) s'étend parallèlement à l'axe de la poignée (5) et a la forme d'un creux (12) pour le pouce d'un opérateur.
b) L'autre surface d'actionnement (9) est formée sur une came (11) dépassant du segment (10), présentant des surfaces bombées, pouvant être entourées par l'index de l'opérateur.
c) La came (11) se trouve face aux creux (12) et présente la surface d'actionnement (9) dans la zone de son relief.
d) Des surfaces d'actionnement (14 et 5) de l' interrupteur de levage et d'abaissement (7) sont prévues dans la zone de prise d'un pouce de l'opérateur pour permettre l'actionnement simultané de la came (11) voisine du régulateur de marche, par l' index de l'opérateur.
